# EUROPÄISCHE PATENTSCHRIFT

(11) **EP 3 733 383 B1**
(45) Veröffentlichungstag und Bekanntmachung des Hinweises auf die Patenterteilung: **21.12.2022**
(21) Anmeldenummer: 19172261.0
(22) Anmeldetag: 02.05.2019
(51) Int. Cl.: B29C 65/78, B29C 65/00, B65B 51/14, B65B 51/16, B65B 11/48

(54) **VORRICHTUNG UND VERFAHREN ZUM HERSTELLEN EINES MIT EINER UMHÜLLUNG VERSEHENEN, EIN BRÜHFÄHIGES MATERIAL ENTHALTENDEN BEUTELS**
DEVICE AND METHOD FOR PRODUCING A BAG WITH A WRAPPER CONTAINING A BREWABLE MATERIAL
DISPOSITIF ET PROCÉDÉ DE FABRICATION D'UN SACHET DOTÉ D'UNE ENVELOPPE, CONTENANT UN MATÉRIAU POUVANT ÊTRE INFUSÉ

(43) Veröffentlichungstag der Anmeldung: 04.11.2020
(73) Patentinhaber: TEEPACK SPEZIALMASCHINEN GMBH & CO. KG, 40667 Meerbusch (DE)
(72) Erfinder: LAMBERTZ, Stefan, 50354 Hürth (DE); KNOPS, Hans, 47839 Krefeld (DE)
(74) Vertreter: Grünecker Patent- und Rechtsanwälte PartG mbB

(56) Entgegenhaltungen:
- WO-A1-2012/117308

## Beschreibung

Die vorliegende Erfindung betrifft ein Verfahren und eine Vorrichtung zum Herstellen einer Verpackungseinheit, die einen Beutel umfasst, der brühfähiges Material enthält und der in einer Umhüllung beispielsweise einer aromadichten Umhüllung vorgesehen ist.

EP 2 231 479 B1 kann hinsichtlich der Vorrichtung und des Verfahrens als gattungsgemäß angesehen werden. Bei diesem Stand der Technik werden Aufgussbeutel zunächst in einer Beutelherstellungseinrichtung hergestellt. Das Ergebnis dieses Zwischenschrittes ist ein Aufgussbeutel, d.h. ein Beutel, in dem brühfähiges Material aufgenommen ist, wobei der Beutel selbst üblicherweise mit einem Faden verbunden ist, der an seinem dem Beutel gegenüberliegenden Ende mit einem Etikett versehen ist. Dieses Zwischenprodukt wird nach dem Stand der Technik an eine Umhüllungsstation überführt, an welcher eine Bahn einer die Umhüllung bildenden Folie bereitgestellt ist, auf welche der Beutel aufgelegt wird, um ein den Beutel überragendes Längenstück der Folie über den Beutel zu verschwenken, sodass dieser zwischen sich gegenüberliegenden Schenkeln der das Umhüllungsmaterial bildenden Folie angeordnet ist. Soweit in der vorliegenden Erfindung auf eine U-Form abgestellt wird, ist diese Bezeichnung nicht wortidentisch zu verstehen. Es geht vor allem darum, dass der Beutel zwischen sich gegenüberliegenden Schenkeln des Umhüllungsmaterials aufgenommen ist, die über eine gemeinsame Kante oder Falz, die von dem Folienmaterial gebildet ist, miteinander verbunden sind. Dabei spielt es keine wesentliche Rolle, ob die Kante des Umhüllungsmaterials U-, V- oder andersförmig geformt ist.

Nachdem im Stand der Technik in dieser Weise der Beutel zwischen den sich gegenüberliegenden Schenkeln des Umhüllungsmaterials aufgenommen ist, wird nach Abtrennen eines Folienstücks von einer kontinuierlich zugeführten Folienbahn die Einheit aus U-förmig gefalteter Folie und Beutel einer Siegelstation zugeführt, in welcher die noch nicht miteinander verbundenen und den Beutel überragenden Seitenränder der sich gegenüberliegenden Schenkel miteinander verbunden werden. Dieses Siegeln erfolgt - wie auch bei der vorliegenden Erfindung - beispielsweise durch Heißsiegeln, d.h. Verschweißen oder Rändeln.

Bei einem alternativen und aus WO 01/62600 A1 bekannten Vorgehen wird der Beutel zunächst aus der Beutelherstellungseinrichtung herausgezogen. Wie bei dem zuvor diskutierten Stand der Technik hat auch bei diesem Stand der Technik die Beutelherstellungseinrichtung ein Karussell mit mehreren zur Aufnahme von Beuteln angepassten Aufnahmen. In eine solche Aufnahme wird der Beutel zusammen mit des Umhüllungsmaterials zurückgeschoben, um den Beutel in einer U-förmigen Umhüllung einzuschlagen, sodass die sich gegenüberliegenden Schenkel des Umhüllungsmaterials zwischen sich den Beutel einschließen. Danach wird der Beutel endgültig von der Beutelherstellungseinrichtung entfernt. Die Einheit aus U-förmig geformter Folie und Beutel wird in eine Siegelstation überführt. Dort wird die Umhüllung in der zuvor beschriebenen Weise durch Siegeln verschlossen.

WO2012/117308 offenbart eine Beutelherstellungsvorrichtung, die ein Karussell mit einer Handhabungsvorrichtung umfasst, die sowohl den Innenbeutel als auch die Umhüllung in einer gefalteten Form hält, wenn sie zu einer Versiegelungsstation bewegt werden.

Der vorliegenden Erfindung liegt das Problem zugrunde, eine demgegenüber ökonomischere und wirtschaftliche Herstellung eines in einer Umhüllung aufgenommenen Beutels anzugeben. Sie will eine hierzu geeignete Vorrichtung sowie eine entsprechende Verfahrensführung definieren.

Im Hinblick auf die vorrichtungsmäßige Lösung des Problems wird mit der vorliegenden Erfindung eine Vorrichtung mit den Merkmalen von Anspruch 1 vorgeschlagen.

Diese Vorrichtung hat eine Beutelhandhabungseinrichtung zur Entnahme des fertigen Beutels aus der Beutelherstellungseinrichtung. Des Weiteren ist eine Umhüllungsmaterialhandhabungseinrichtung zur Handhabung des Umhüllungsmaterials beim U-förmigen Einschlagen der Umhüllungsmaterialbahn vorgesehen. Die Beutelhandhabungseinrichtung und die Umhüllungsmaterialhandhabungseinrichtung sind erfindungsgemäß so ausgebildet, dass der Beutel gehalten von der Beutelhandhabungseinrichtung und das Umhüllungsmaterial gehalten von der Umhüllungsmaterialhandhabungseinrichtung zwischen die Siegelbacken der Siegelstation verbracht werden.

Gemäß der vorliegenden Erfindung sind dementsprechend zwei jeweils für sich den beiden Komponenten des umhüllten Beutels zugeordnete Handhabungseinrichtungen verwirklicht, wobei die Beutelhandhabungseinrichtung in der Regel ausschließlich den Beutel handhabt und die Umhüllungsmaterialhandhabungseinrichtung in der Regel ausschließlich mit dem Umhüllungsmaterial zusammenwirkt. Das Zusammenwirken der beiden Handhabungseinrichtungen erfolgt dabei beim Einbringen von Umhüllungsmaterial und Beutel in die Siegelstation. Die Handhabungseinrichtungen verbringen die beiden Komponenten der fertigen Verpackung, nämlich Umhüllung und Beutel jeweils für sich und unabhängig voneinander in die Siegelstation, d.h. zwischen die Siegelbacken derselben.

Die beiden Handhabungseinrichtungen ermöglichen dementsprechend eine Handhabung der beiden Komponenten unabhängig voneinander, sodass beispielsweise beim Zuführen der beiden Komponenten zueinander eine relative Positionierung von Umhüllungsmaterial und Beutel, ggf. auch ein Umformen der Umhüllungsmaterialbahn beim Einbringen zwischen die Siegelbacken erfolgen kann. Die vorliegende Erfindung kommt dabei namentlich ohne eine gesonderte Umhüllungsstation aus, in welcher der fertige Beutel zwischen die U-förmigen Schenkel der Folie als Umhüllungsmaterial durch Auflegen auf eine zunächst ebene Folienbahn und Umklappen eines freien Endes der Folie zur Ausbildung der Schenkel gelegt wird.

Vielmehr kann das Umhüllungsmaterial beim Zuführen und Einbringen in die Siegelstation U-förmig umgeformt werden. Dazu greift üblicherweise die Umhüllungsmaterialhandhabungseinrichtung das Umhüllungsmaterial in einem mittleren Bereich. Bei diesem Greifen erstreckt sich das Umhüllungsmaterial im Wesentlichen eben. Der mittlere Bereich liegt üblicherweise auf einer Bewegungsbahn, den der fertiggestellte Beutel beim Verbringen des Beutels aus der Beutelherstellungseinrichtung beschreitet. Diese Bewegungsbahn verläuft stetig, vorzugsweise im Wesentlichen geradlinig zwischen der Beutelherstellungseinrichtung, spezifisch derjenigen Station der Beutelherstellungseinrichtung, an der der fertiggestellte Beutel aus der Beutelherstellungseinrichtung abgegeben wird, und der nächsten Bearbeitungsstation, d.h. denenigen Siegelbacken, die zur Aufnahme des Beutels zusammen mit des Umhüllungsmaterials geöffnet sind. Die Beutelherstellungseinrichtung und die Siegelstation liegen dementsprechend im Wesentlichen unmittelbar benachbart zueinander. Der fertiggestellte Beutel wird unmittelbar und ohne weitere Bearbeitung von der Beutelherstellungseinrichtung in die Siegelstation überführt. Das Fügen von Umhüllungsmaterial und Beutel, insbesondere das Einschlagen des Beutels zwischen die Schenkel des U-förmig gebogenen Umhüllungsmaterials erfolgt erst im Rahmen des Einführens in die Siegelstation. Dementsprechend nähert sich der Beutel erst dem Umhüllungsmaterial zum Einschlag in dasselbe an, wenn der Beutel bereits in die Siegelstation, namentlich die geöffneten Siegelbacken derselben eingebracht wird.

Die Beutelhandhabungseinrichtung und die Umhüllungsmaterialhandhabungseinrichtung sind nicht nur Einrichtungen zum Fügen von Beutel und Umhüllungsmaterial. Sie sind vielmehr auch Handhabungseinrichtungen zum Einbringen der beiden Komponenten zwischen die Siegelbacken der Siegelstation. Sie bewirken dabei den Einschlag des Beutels und das Einbringen von Beutel und Umhüllungsmaterial zwischen die Siegelbacken in einem.

So lässt sich die Vorrichtung zur Herstellung eines in einer Umhüllung aufgenommenen Beutels vereinfachen.

Mit Blick auf die zuvor beschriebene Verfahrensführung, bei welcher das Umhüllungsmaterial durch die Umhüllungsmaterialhandhabungseinrichtung gegriffen und in die Siegelstation eingebracht wird, wird gemäß einer bevorzugten Weiterbildung der vorliegenden Erfindung eine Umhüllungsmaterialzufuhreinrichtung vorgeschlagen, die ein Längenstück des Umhüllungsmaterials zwischen den in der Beutelherstellungseinrichtung befindlichen fertiggestellten Beutel und der Siegelstation hält. Das Längenstück kann dabei noch als Teilstück einer im Grunde endlos zugeführten Umhüllungsmaterialbahn vorgesehen und erst nach im Rahmen der Überführung an die Siegelstation abgeschnitten werden. Das Längenstück kann aber auch mit seiner finalen, beispielsweise die Umhüllung ausbildenden Länge zugeführt werden. Das Umhüllungsmaterialstück ist dabei üblicherweise sich quer zu der Bewegungsbahn des Beutels erstreckend vorgesehen, die der Beutel bei seinem Weg zwischen der Beutelherstellungseinrichtung und der Siegelstation beschreitet.

Das Umhüllungsmaterialstück wird üblicherweise von einem endlos zugeführten Umhüllungsmaterial abgeschnitten, wenn die Umhüllungsmaterialhandhabungseinrichtung das Umhüllungsmaterial greift. So ist sichergestellt, dass bis zum Abtrennen des vorbestimmten Längenstücks dieses als Teil eines Kontinuums gehandhabt werden kann. Dabei ist das Umhüllungsmaterialstück beim Greifen von der Umhüllungsmaterialhandhabungseinrichtung üblicherweise in seitlichen Führungsschienen gehalten, die im mittleren Bereich des Längenstücks des Umhüllungsmaterials offen ist, so dass die Umhüllungsmaterialhandhabungseinrichtung dort angreifen und das Längenstück des Umhüllungsmaterials aus der Führung herausziehen kann. Die Führung ist in der Regel mit sich trichterförmig in Richtung auf die Siegelstation verjüngenden Bereichen versehen, über welche die zunächst im Wesentlichen eben und geradlinig zugeführte Bahn des Umhüllungsmaterials beim Zuführen auf die Siegelstation umgeformt, also gefaltet wird.

Diese Bewegungsbahn kann geradlinig oder kreissegmentförmig sein. Sie ist üblicherweise stetig. Der Beutel wird auf dieser Bewegungsbahn kontinuierlich und/oder ohne weitere Bearbeitung auf dieser Bewegungsbahn geführt bzw. stetig bewegt.

Das Fügen von Beutel und Umhüllungsmaterial erfolgt bei der erfindungsgemäßen Vorrichtung beim Einbringen beider Komponenten zwischen die Siegelbacken. Da es an einer gemeinsamen Handhabungseinrichtung für die Einheit aus Beutel und Umhüllungsmaterial fehlt und im Hinblick auf das Versiegeln zwischen den Siegelbacken wird gemäß einer bevorzugten Weiterbildung der vorliegenden Erfindung eine der Siegelstation zugeordnete Klemmeinrichtung vorgeschlagen. Diese Klemmeinrichtung hat üblicherweise zumindest ein relativ zu einer der Siegelbacken bewegliches Klemmelement. Bevorzugt weist jede der beiden Siegelbacken zum Einsiegeln des Beutels zwischen die Umhüllung eine entsprechende Klemmeinrichtung auf, wobei jede einzelne Klemmeinrichtung bevorzugt relativ zu der zugeordneten Siegelbacke beweglich ist. So kann die Klemmeinrichtung den Beutel zusammen mit dem U-förmig geformten, den Beutel einschließenden Umhüllungsmaterial vor dem Schließen der Siegelbacken zwischen denselben halten.

Bei einer denkbaren Ausgestaltung ist der Beutel so auf relativ zu dem Umhüllungsmaterial positioniert, dass die einander gegenüberliegenden Ränder des Umhüllungsmaterials den Beutel überragen. Der Beutel mag unmittelbar an der Kante/Falz des Umhüllungsmaterials anliegen. Die den Beutel überragenden und beim Einbringen der Einheit aus Beutel und Umhüllungsmaterial noch nicht miteinander verbundenen Ränder des Umhüllungsmaterials werden zwischen die üblicherweise U-förmigen Siegelbacken verbracht. Diese haben in ihrem Inneren üblicherweise eine oder mehrere Klemmeinrichtungen, die im mittleren Bereich auf die Einheit einwirken, um den Beutel zusammen mit des Umhüllungsmaterials in der Siegelstation zu halten und in der gewünschten Weise so zu positionieren, dass die zu siegelnden Ränder zwischen die Funktionsflächen der Siegelbacken gelangen.

Bei der zuvor bereits skizzierten Verfahrensführung wird zunächst der ein brühfähiges Material enthaltende Beutel hergestellt. Dieser wird zwischen einander gegenüberliegende Schenkel des Umhüllungsmaterials angeordnet. Die Schenkel werden in einer Siegelstation zur Ausbildung der den Beutel umgebenden Umhüllung miteinander verbunden. Die Schenkel sind durch U-förmiges Formen des Umhüllungsmaterials gebildet. Der Einschlag kann dabei in einem mittleren Bereich des Umhüllungsmaterials erfolgen. So befindet sich die Kante bzw. Falz des Umhüllungsmaterials zwischen in etwa gleich langen Schenkeln des Umhüllungsmaterials. Die beiden Schenkel werden beim Einbringen in die Siegelstation ausgeformt. Dementsprechend nähern sich die einander gegenüberliegenden und durch die spätere Kante bzw. Falz voneinander getrennten und verbundenen Längenabschnitte erst beim Einbringen derselben in die Siegelstation einander an.

Gemäß einer bevorzugten Weiterbildung des erfindungsgemäßen Verfahrens wird der mittlere Bereich des Umhüllungsmaterials quer zur Längserstreckung derselben in Richtung auf die Siegelstation bewegt. So erstreckt sich das in der Regel ebene Umhüllungsmaterial vor dem Handhaben mit der Umhüllungsmaterialhandhabungseinrichtung üblicherweise tangential zu einer Siegelstation mit sich um eine gemeinsame Drehachse drehenden Paaren von Siegelbacken bzw. tangential zu einem Karussell, welches die wesentliche Komponente der Beutelherstellungseinrichtung ausbilden kann und die verschiedenen Aufnahmen für den Beutel aufweist.

Gemäß einer bevorzugten Verfahrensführung werden das Umhüllungsmaterial und der Beutel beim Einbringen in die Siegelstation auf der Bewegungsbahn relativ zueinander bewegt. Dies bedeutet, dass die Geschwindigkeit der beiden Komponenten auf besagter Bewegungsbahn nicht notwendigerweise bis zum vollständigen Einbringen von Umhüllungsmaterial und Beutel zwischen die Siegelbacken synchron sein muss. Mit der zuvor erwähnten Relativbewegung ist nicht das Verschwenken der einzelnen Schenkel des Umhüllungsmaterials relativ zu dem Beutel gemeint. Vielmehr ist eine Relativbewegung der sich im Bilden befindlichen Kante oder Falz zu einem Massepunkt des Beutels gegeben. Mit zunehmender Bewegung des Beutels und des Umhüllungsmaterials und Annäherung an die Siegelstation ergibt sich dabei eine zunehmende Annäherung von Beutel und Umhüllungsmaterial. Bevorzugt wird das Umhüllungsmaterial bereits in Richtung auf die Siegelstation bewegt, während der Beutel noch in der Beutelherstellungseinrichtung verharrt. Mit anderen Worten wird nicht nur das Umhüllungsmaterial U-förmig beim Einbringen in die Siegelstation umgeformt. Vielmehr werden auch der Beutel und das Umhüllungsmaterial auf dem Weg in die Siegelstation zusammengefasst, sodass deren endgültige relative Lage zueinander ungeachtet einer eventuell noch vorzunehmenden Verschwenkbewegung der Schenkel erst während des Einbringens, ggf. auch erst am Ende der Einbringbewegung in die Siegelstation erreicht wird.

Bei einer relativ einfach zu beherrschenden Verfahrensführung, die gemäß einem bevorzugten Aspekt der vorliegenden Erfindung angegeben wird, wird das Umhüllungsmaterial beim Einbringen des Beutels in die Siegelstation dem Beutel vorlaufend bewegt. Die Kante bzw. Falz liegt dementsprechend in Bewegungsrichtung des Beutels in Richtung auf die Siegelstation vor dem Beutel. So weist die Öffnung des U-förmig ausgebildeten Umhüllungsmaterials nach außen, sodass das Vorbringen des Beutels zwischen die Schenkel des Umhüllungsmaterials vereinfacht ist. Im Rahmen dieser Bewegung wirken die die Schenkel bildenden Abschnitte gegen Umformelemente, die beispielsweise an einer das Umhüllungsmaterial haltenden Führung angeordnet sein können und die Schenkel um die Falz aufeinander zu bewegen.

Bei der erfindungsgemäßen Verfahrensführung und der erfindungsgemäßen Vorrichtung werden der Beutel einerseits und das Umhüllungsmaterial andererseits bevorzugt durch Klemmen fixiert. Die Beutelhandhabungseinrichtung hat danach Mittel zum Klemmen des fertiggestellten Beutels. Auch die Umhüllungsmaterialhandhabungseinrichtung hat Mittel zum Klemmen des Umhüllungsmaterials, um diese vorrübergehend an der Umhüllungsmaterialhandhabungseinrichtung zu fixieren und auf diese Weise fixiert über die Handhabungseinrichtung zwischen die Siegelbacken zu verbringen. Die Umhüllungsmaterialhandhabungseinrichtung hat dazu vorzugsweise ein vorlaufendes und ein nachlaufendes Umhüllungsmaterialhandhabungselement.

Die beiden Umhüllungsmaterialhandhabungselemente sind so ausgebildet, dass sie durch Relativbewegung aufeinander zu- und voneinander wegbewegt werden können, wobei die beiden Umhüllungsmaterialhandhabungselemente bei maximaler Annäherung das Umhüllungsmaterial zwischen sich klemmen und dementsprechend mitnehmen können, wenn das vorlaufende und das nachlaufende Umhüllungsmaterialhandhabungselement synchron zum Einbringen des Umhüllungsmaterials zwischen die Siegelbacken in Richtung auf die Siegelbacken bewegt werden.

Bei einer bevorzugten Verfahrensführung der vorliegenden Erfindung wird indes das nachlaufende Umhüllungsmaterialhandhabungselement nach dem Einbringen des Umhüllungsmaterials zwischen die Siegelbacken in entgegengesetzte Richtung bewegt, sodass das nachlaufende Umhüllungsmaterialhandhabungselement vor dem Schließen der Siegelbacken außerhalb der Siegelbacken angeordnet wird. Im Hinblick auf eine zügige Verfahrensführung bleibt indes das vorlaufende Umhüllungsmaterialhandhabungselement auf Höhe der Siegelbacken beim Schließen derselben und wird erst nach der vollständigen Aufnahme des Umhüllungsmaterials zusammen mit dem Beutel in Richtung auf die Umhüllungsmaterialzufuhreinrichtung bewegt, um das nächste Längenstück des Umhüllungsmaterials durch Klemmung zu greifen und zwischen die Siegelbacken zu führen.

Durch diese Verfahrensführung lässt sich das vorlaufende Umhüllungsmaterialhandhabungselement bis zum vollständigen Schließen der Siegelbacken noch zum Fixieren des Umhüllungsmaterials zwischen den Siegelbacken nutzen.

Insgesamt bietet die erfindungsgemäße Lösung ein schnelleres und danach wirtschaftlich durchzuführendes Verfahren und eine zur Durchführung des Verfahrens geeignete Vorrichtung. Die Lösung verzichtet auf eine Umhüllungsstation, in welcher erst die Einheit aus U-förmig gefaltetem Umhüllungsmaterial mit dem dazwischen angeordneten Beutel gebildet wird, welche Einheit danach zwischen die Siegelbacken verbracht wird. So kommt die erfindungsgemäße Vorrichtung mit einer geringeren Zahl von Vorrichtungselementen zur Herstellung eines mit einer Umhüllung versehenen Beutels aus. Da auf eine Umhüllungsstation gänzlich verzichtet wird, ist auch die Anzahl der Stationen, die die einzelnen Komponenten bis zur Fertigstellung der Verpackungseinheit aus Umhüllung und Beutel durchlaufen muss, vermindert. Dadurch ergibt sich eine schnellere und mithin ökonomischere Herstellung der Verpackungseinheit.

Wie im Stand der Technik kann die Umhüllung im Rahmen der vorliegenden Erfindung durch eine Folie gebildet sein, die eine aromadichte Verpackung um den Beutel bewirkt. Die Umhüllung kann aber aus anderem Material gebildet sein, welches einen gewissen Schutz des Beutels bewirkt, beispielsweise auch um den Beutel als Lebensmittel vor direkter Berührung durch Dritte zu schützen, bis die Umhüllung geöffnet und der Beutel entnommen wurde. So kann das Umhüllungsmaterial auch Papier, Gaze oder eine löchrige Folie sein.

Im Falle einer aus Kunststofffolie gebildeten Umhüllung kann das Siegeln durch Verschweißen der beiden Lagen des Umhüllungsmaterials gegeneinander erfolgen. Ein für sich nicht siegelfähiges, die Umhüllung ausbildendes Material kann mit einer siegelfähigen Beschichtung oder einem siegesfähigen Streifen dort versehen sein, wo das Schweißen zum Versiegeln stattfinden soll. Das Versiegeln kann aber auch durch Rändeln bzw. Prägen oder andere Fügetechniken zum Verbinden von zwei Lagen erfolgen.

Die vorliegende Erfindung wird nachfolgend anhand eines Ausführungsbeispiels in Verbindung mit der Zeichnung näher erläutert. Die entsprechende Beschreibung verdeutlicht weitere Einzelheiten, Merkmale und Vorteile der vorliegenden Erfindung. In der Zeichnung zeigen:
- Figur 1: eine Seitenansicht wesentlicher Teile eines Ausführungsbeispiels zur Herstellung eines umhüllten Beutels;
- Figur 2: die Seitenansicht nach Figur 1 in vergrößerter Darstellung;
- Figur 3: die in den Figuren 1 und 2 dargestellte Ausgangslage des Ausführungsbeispiels in einer perspektivischen Seitenansicht;
- Figuren 4a-4n: verschiedene Phasen beim Betrieb des Ausführungsbeispiels in Seitenansichten bzw. perspektivischen Seitenansichten gemäß den Figuren 2 und 3;
- Figur 5: eine perspektivische Seitenansicht eines Ausführungsbeispiels der Siegelstation in einer ersten Stellung;
- Figur 6: eine Seitenansicht des Ausführungsbeispiels nach Figur 5 mit weiteren Details des Ausführungsbeispiels in einer zweiten Stellung und
- Figur 7: eine Seitenansicht nach Figur 7 in einer dritten Stellung.

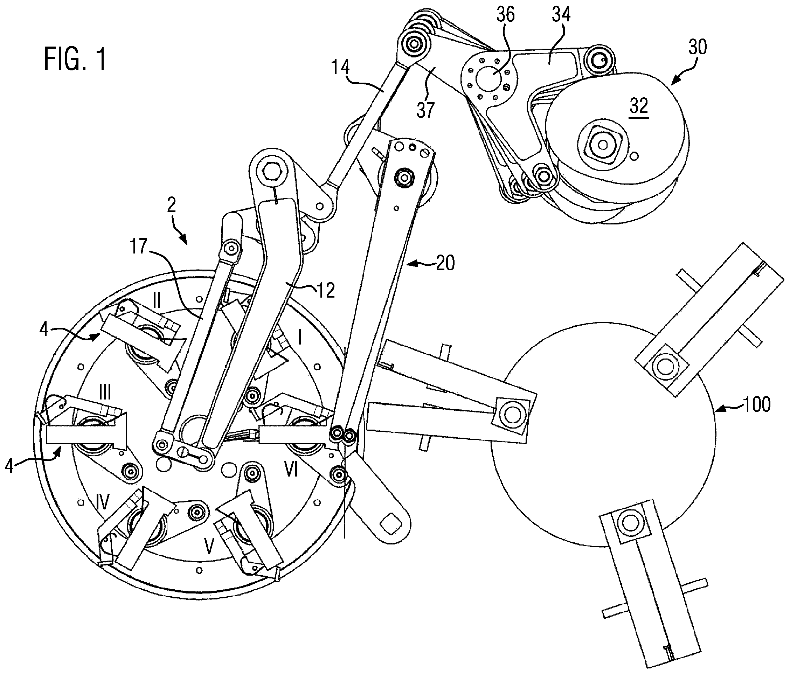

Das in Figur 1 gezeigte Ausführungsbeispiel hat eine mit Bezugszeichen 2 gekennzeichnete Beutelherstellungseinrichtung und eine mit Bezugszeichen 100 gekennzeichnete Siegelstation.

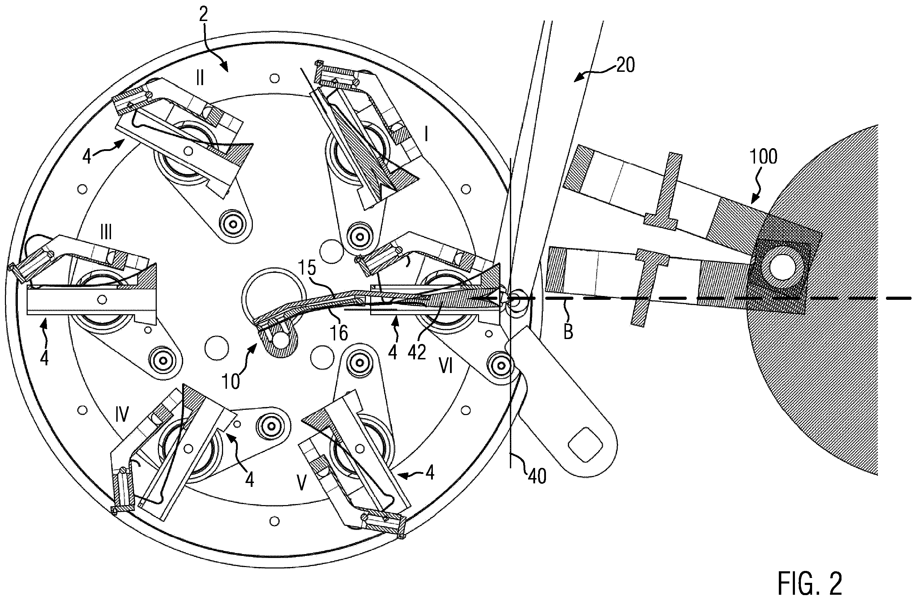

Die Beutelherstellungseinrichtung 2 umfasst ein Karussell mit mehreren um eine Achse drehenden Aufnahmen 4 zum Aufnehmen einer wasserdurchlässigen Umhüllung, die zur Ausbildung des Beutels ein brühfähiges Material enthaltend umgeformt und üblicherweise mit einem Faden und einem Etikett verbunden wird. Bezüglich der einzelnen Stationen und deren Ausgestaltung kann auf den Stand der Technik verwiesen werden, so beispielsweise EP 2 231 479 B1 oder WO 01/62600 A1. Mit den Bezugszeichen I bis VI sind dabei in Figur 2 verschiedene Positionen gekennzeichnet, in denen sich die Aufnahme 4 befinden kann, um die unterschiedlichen Komponenten des fertig hergestellten bzw. fertigzustellenden Beutels zu empfangen und zu verarbeiten. Hierbei einwirkende Elemente sind aus Gründen einer klaren Darstellung nicht gezeigt. In Position VI ist der Beutel fertiggestellt.

Die Figuren 1 bis 3 zeigen Elemente einer mit Bezugszeichen 10 gekennzeichneten Beutelhandhabungseinrichtung und einer mit Bezugszeichen 20 gekennzeichneten Umhüllungsmaterialhandhabungseinrichtung. Bei dem Umhüllungsmaterial des gezeigten Ausführungsbeispiels handelt es sich um eine aromadichte Folie. So wird in der nachstehenden Beschreibung auf eine Folienhandhabungseinrichtung 20 abgestellt. Die Beutelhandhabungseinrichtung 10 umfasst zwei sich in etwa parallel erstreckende Arme 12, 13, die gelenkig miteinander verbunden sind und über Koppelstangen 14 mit einer gemeinsamen Antriebseinrichtung 30 gekoppelt sind. Diese gemeinsame Antriebseinrichtung 30 hat verschiedene Kurvenscheiben 32, die verdrehfest auf einer gemeinsamen Antriebswelle 33 der Antriebseinrichtung 30 befestigt sind und mit Abnehmern 34 gekoppelt sind, in denen die Außenumfangsflächen der Kurvenscheiben 32 jeweils abrollen, wobei die Abnehmer 34 für sich jeweils auf einer gemeinsamen Lagerachse 36 verschwenkbar gelagert und mit einem Hebel 37 versehen sind, der gelenkig mit der zugehörigen Koppelstange 14 verbunden ist. Die Koppelstangen 14 wirken über Hebel auf die Arme 12 ein.

Die Antriebswelle 30 betätigt sowohl die einzelnen Komponenten der Beutelhandhabungseinrichtung 10 wie auch die Komponenten der Folienhandhabungseinrichtung 20. So sind beide Handhabungseinrichtungen 10, 20 mit einem gemeinsamen Antrieb versehen und zwangssynchronisiert.

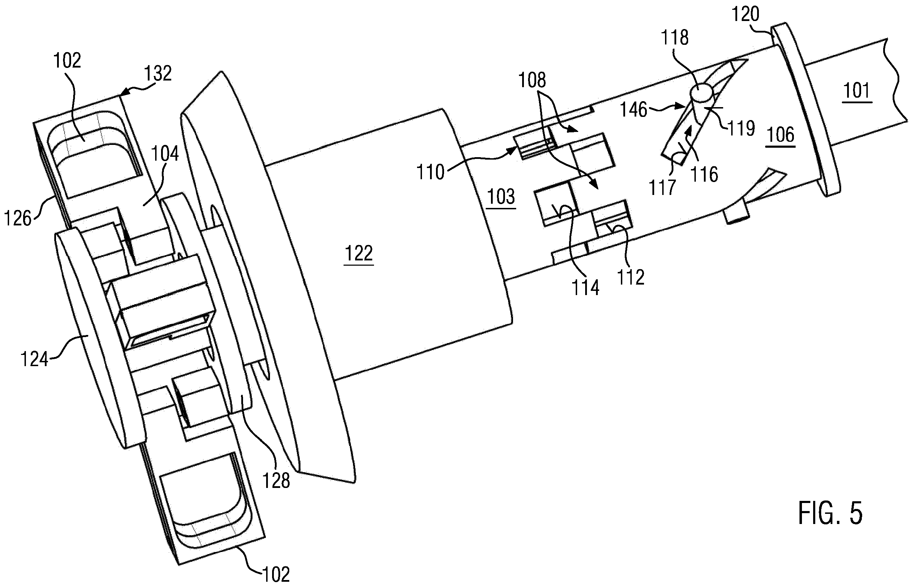

Der Siegelstation 100 sind erste Siegelbacken 102 und zweite Siegelbacken 104 zugeordnet. Details der Siegelstation werden unter Bezugnahme auf die Figuren 5 bis 7 erläutert werden.

Für die nachfolgende Beschreibung unter Bezugnahme auf die Figuren 1 bis 4 ist die Funktion der Siegelbacken 102, 104 lediglich insoweit relevant, als dass die beiden Siegelbacken 102, 104 zum Einsiegeln des Beutels in einer Folienumhüllung relativ zueinander bewegt und gegeneinander angelegt werden können und in entgegengesetzter Richtung verschwenkt werden können, um den eingesiegelten Beutel freizugeben bzw. einen neuen Beutel mit der Folie aufzunehmen, wobei die paarweise vorgesehenen Siegelbacken 102, 104 um eine gemeinsame Achse verschwenkbar sind. In den Figuren 1 bis 4 ist die Siegelstation 100 lediglich schematisch dargestellt. Die tatsächliche Ausgestaltung der Ausführungsform weicht indes davon ab und ist den Figuren 5 bis 7 zu entnehmen.

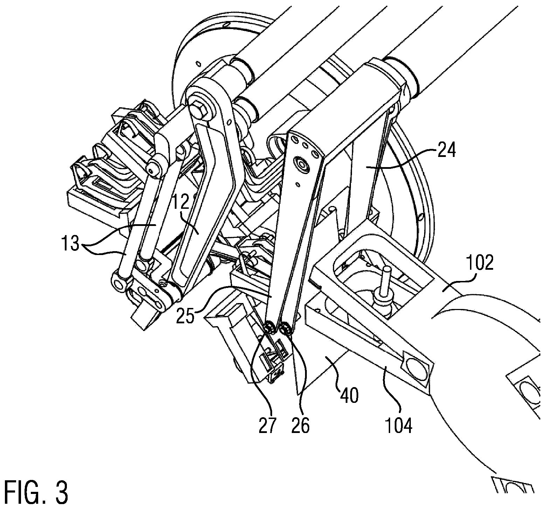

Wie Figur 3 verdeutlicht, weist die Folienhandhabungseinrichtung 20 ein mit Bezugszeichen 21 gekennzeichnetes vorlaufendes Folienhandhabungselement und ein mit Bezugszeichen 22 gekennzeichnetes nachlaufendes Folienhandhabungselement auf, wobei jedes der Elemente 21, 22 jeweils paarweise vorgesehene Folienhandhabungsarme 24 bzw. 25 aufweist, wobei jedes Paar verschwenkbar gelagert und unabhängig voneinander antreibbar sind und jeweils für sich nach innen vorspringende Klemmvorsprünge aufweisen, wobei der Klemmvorsprung der vorlaufenden Handhabungsarme 24 mit Bezugszeichen 26 und der nachlaufenden Handhabungsarme 25 mit Bezugszeichen 27 versehen sind.

Die Arme der Beutelhandhabungseinrichtung 10 sind als vorderer Beutelhandhabungsarm 12 ausgebildet, der einen Klemmschuh 15 trägt, und als hinterer Beutelhandhabungsarm 13, der eine mit dem Klemmschuh 15 zusammenwirkende Klemmfeder 16 betätigt, die relativ zu dem Klemmschuh 15 verschwenkbar ist. Diese Elemente sind in den Figuren 5 ff. im Detail beschrieben. Ein weiterer Betätigungsarm 17 verschwenkt den Klemmschuh 15 relativ zu dem vorderen Beutelhandhabungsarm 12.

Die Figur 3 zeigt eine tangential in Bezug auf die Drehachsen der Beutelherstellungseinrichtung 2 und der Siegelstation 100 als ebene Bahn zugeführtes Umhüllungsmaterial 40 in Form einer Folie, die in der Phase nach Figur 3 zwischen dem vorlaufenden Klemmvorsprung 26 und dem nachlaufenden Klemmvorsprung 27 durch relative Schwenkbewegung der beiden Handhabungsarme 24, 25 relativ zueinander geklemmt ist. Diese Position stellt die Ausgangsposition für das Einführen der Folie 40 zwischen die beiden Siegelbacken 102, 104 dar. Sie ist in entsprechender Weise in Figur 2 dargestellt, wobei in dieser Figur ein zwischen die Siegelbacken 102, 104 zu verbringender Beutel mit Bezugszeichen 42 gekennzeichnet ist. Die Arme 12, 13, 17 sind aus Darstellungsgründen weggelassen.

Ersichtlich wird die Folie 40 zwischen den beiden vorlaufenden und nachlaufenden Klemmvorsprüngen 26, 27 in ihrem mittleren Bereich geklemmt und gegriffen. In dieser Phase sind der Klemmschuh 15 mit der Klemmfeder 16 in die zugehörige Aufnahme 4 zum Umgreifen des Beutels 42 eingeführt. Die beiden Siegelbacken 102, 104 schließen eine mit Bezugszeichen B gekennzeichnete Bewegungsbahn von Folie 40 und Beutel 42 noch nicht zwischen sich ein. Tatsächlich befinden sich die beiden Siegelbacken 102, 104 oberhalb dieser Bewegungsbahn B. Diese Bewegungsbahn B verläuft im Wesentlichen als Radiallinie, die den Drehpunkt des Karussells der Beutelherstellungseinrichtung 2 schneidet. Die Bewegungsbahn B erstreckt sich geradlinig zwischen der Beutelherstellungseinrichtung 2 und der Siegelstation 10.

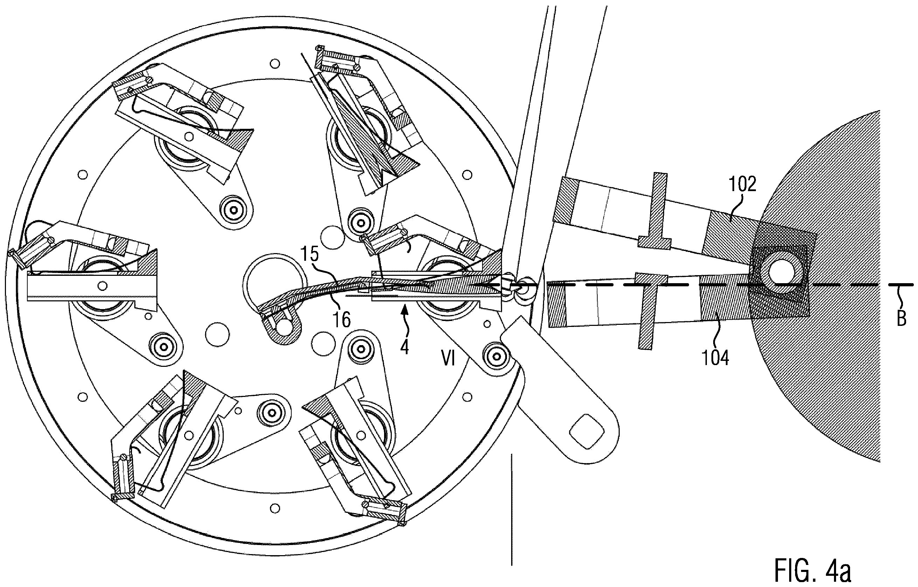

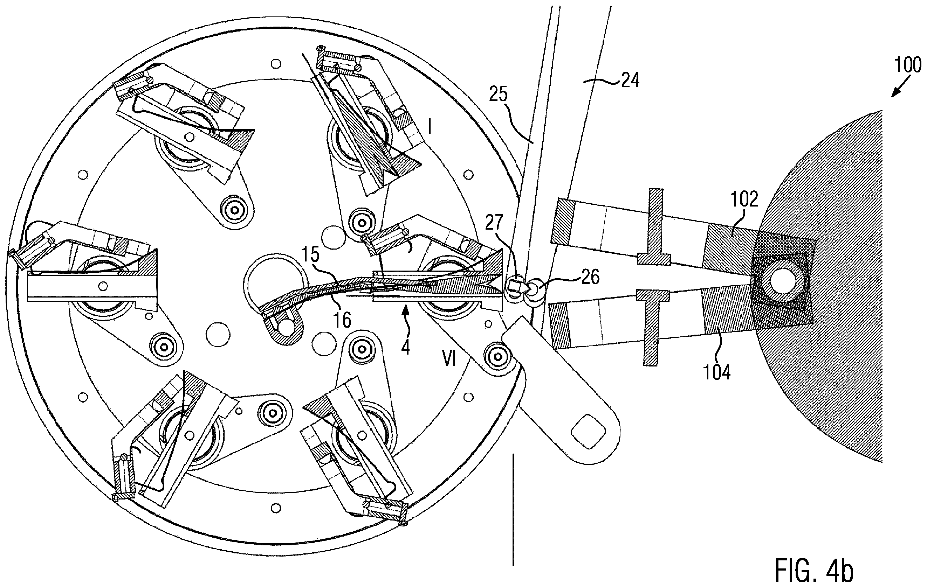

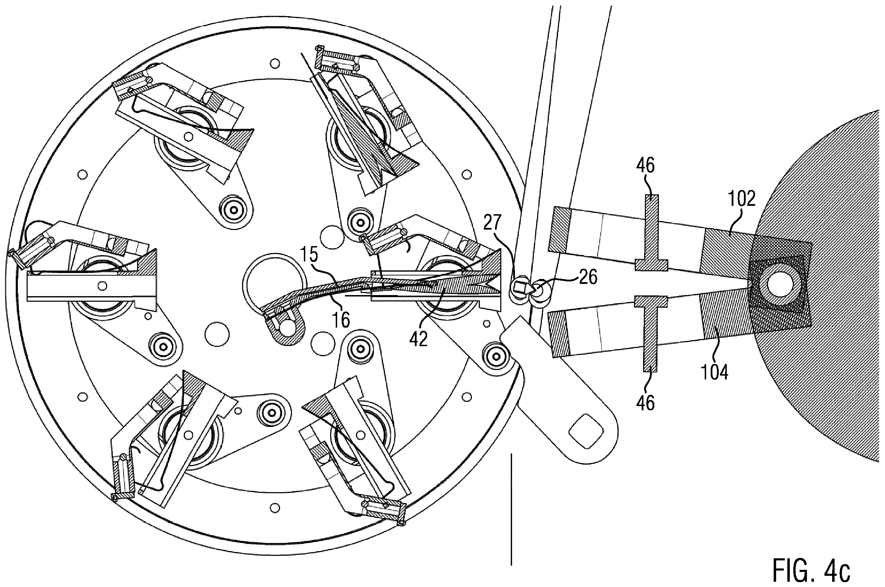

In der in Figur 4a gezeigten Phase sind die beiden Handhabungsarme 24, 25 bereits in Richtung auf die Siegelstation 100 unter Mitnahme der Folie 40 verschwenkt worden. In einem geringeren Maße sind der Klemmschuh 15 und die Klemmfeder 16 in die Aufnahme 4 vorgetrieben worden. In der Sequenz zwischen Figur 4b und 4a wurde die Klemmfeder 16 zur Klemmung des Beutels 42 zwischen dem Klemmschuh 15 und der Klemmfeder 16 verschwenkt, während der Klemmschuh in der Aufnahme verharrt. Das Karussell der Beutelherstellungseinrichtung 2 verbleibt ortsfest. Entsprechendes ergibt sich für Figur 4c, die deutlich im Vergleich zu Figur 4b erkennen lässt, dass die Folie 40 bereits eine bestimmte Strecke auf der Bewegungsbahn B in Richtung auf die Siegelstation 100 vorangeschritten ist, wohingegen der Beutel 42 weiterhin in seiner Aufnahme 4 verharrt. Die Folie 40 läuft dementsprechend dem Beutel 42 voraus.

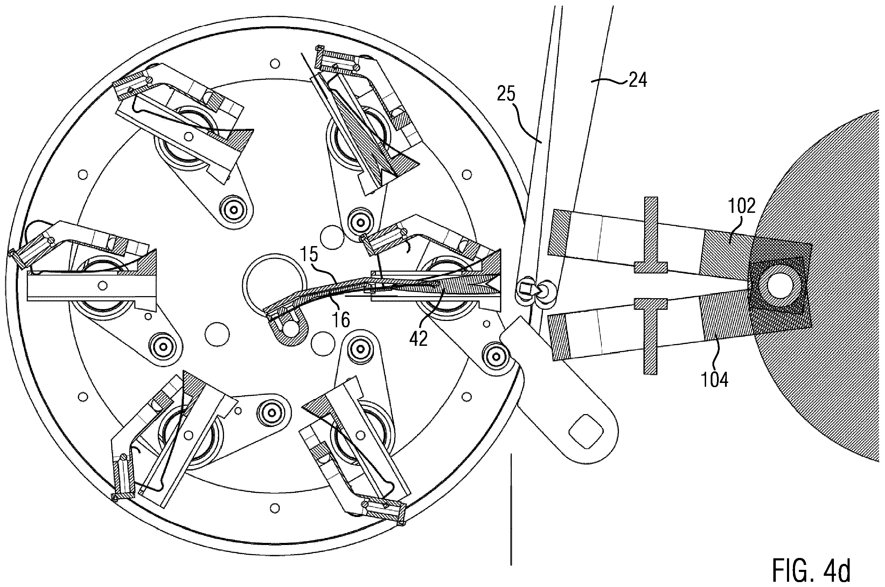

Erst in der Darstellung gemäß Figur 4d werden beide Komponenten der herzustellenden Verpackungseinheit bestehend aus Folie 40 und Beutel 42 zeitgleich zwischen die Siegelbacken 102, 104 bewegt. Diese schließen mittlerweile die Bewegungsbahn B zwischen sich ein. Figur 4a zeigt den Beginn der Bewegung des Beutels 42 auf der Bewegungsbahn B.

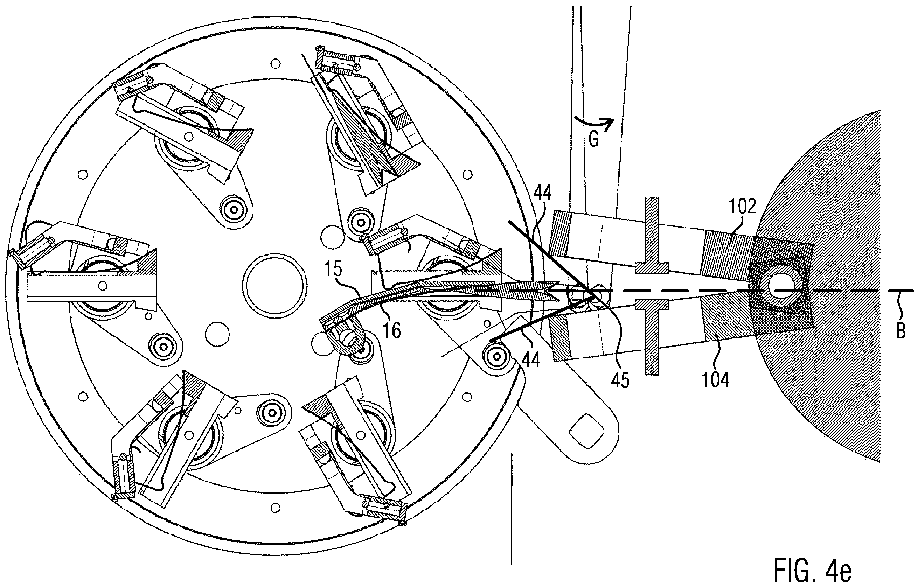

Wie aus Figur 4e erkennbar wurde die Folie 40 U-förmig eingeschlagen, wodurch zwei sich gegenüberliegende Schenkel 44 der Folie 40 zwischen einer Falz 45 gebildet sind, die mit zunehmender Annäherung, d.h. Einbringbewegung der Folie 40 und des Beutels 42 zwischen die Siegelbacken 102, 104 zunehmend dem Beutel 42 angenähert werden. Die Klemmfeder 16 hat den Beutel 42 freigegeben. Eine die Folie 40 beim Greifen durch die Folienhandhabungseinrichtung 20 randseitig haltende, in der Zeichnung nicht gezeigte Führung, die sich tangential zu der Beutelherstellungseinrichtung 2 erstreckt, ist mittig ausgespart, so dass die Klemmvorsprünge 26, 27 die Folie 40 greifen können. Die Führung hält ferner sich trichterförmig in Richtung auf die Siegelstation 100 verjüngende Formelemente, die mit der Folie 40 zusammenwirken, um die sich gegenüberliegenden Schenkel 44 um die Falz 45 zu verschwenken.

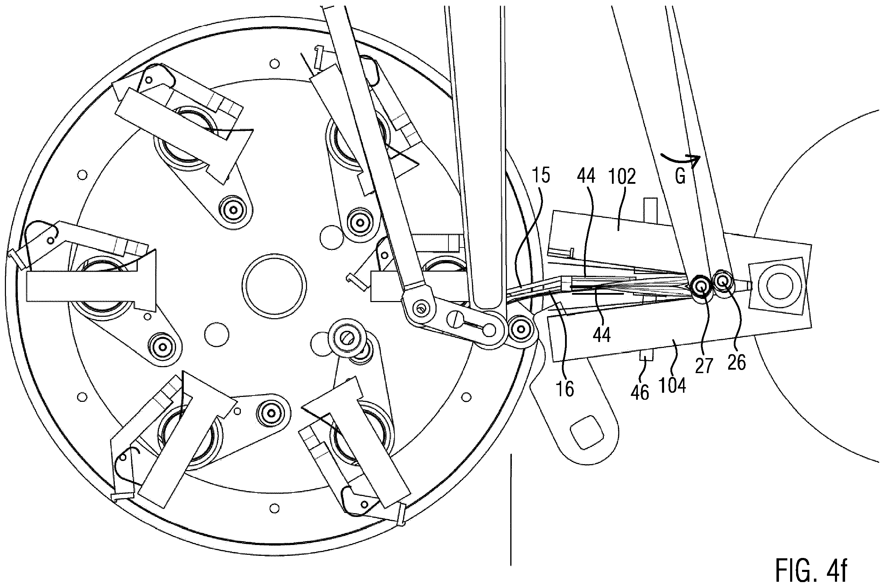

Die Figur 4f zeigt die Endlage der Beutelhandhabungseinrichtung 10 und der Folienhandhabungseinrichtung 20. In der Figur 4f gezeigten Stellung sind Folie 40 und Beutel 42 in ihre Siegellage zwischen die beiden Siegelbacken 102, 104 verbracht worden.

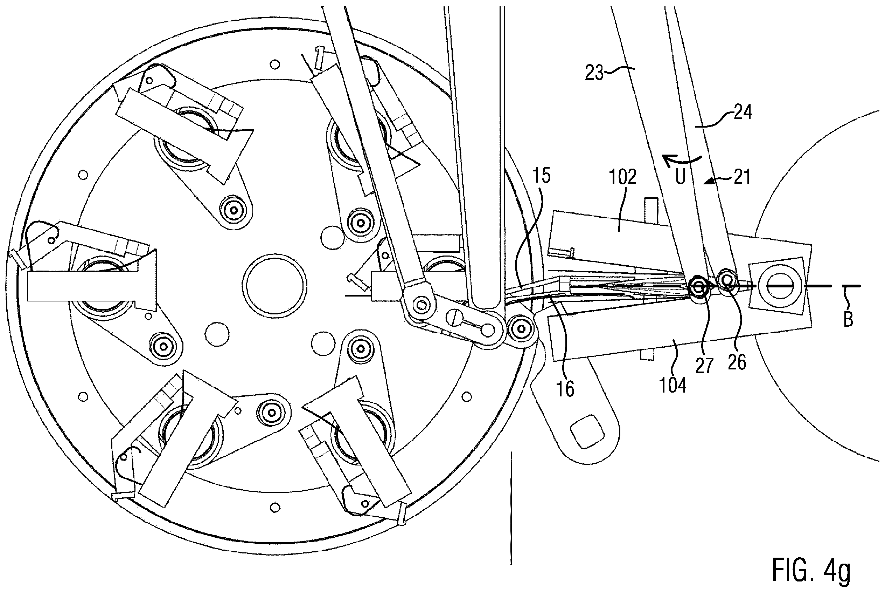

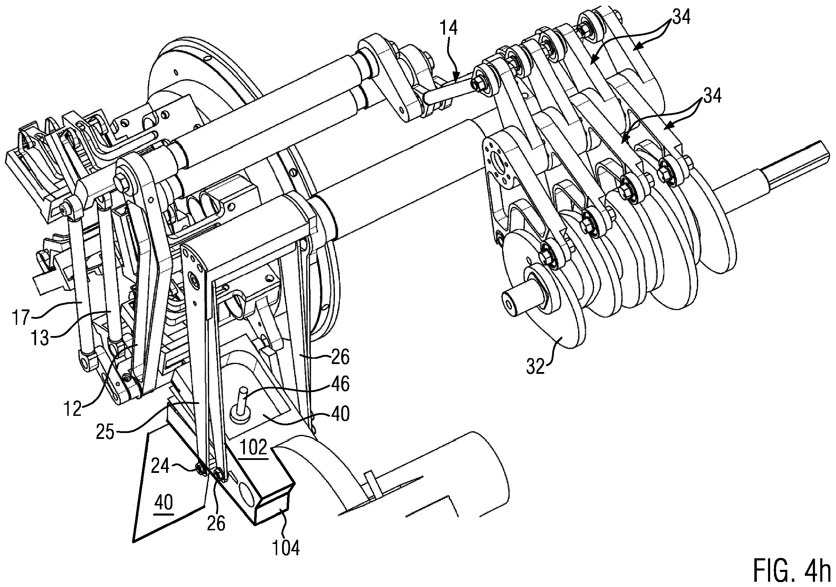

Nun wird die Beutelhandhabungseinrichtung 10 in entgegengesetzter Richtung verschwenkt, d.h. gemäß der Darstellung nach Figur 4g im Uhrzeigersinn U. Das vorlaufende Folienhandhabungselement 21 verbleibt ortsfest, wohingegen das nachlaufende Folienhandhabungselement 22 wie die Beutelhandhabungseinrichtung 10 im Uhrzeigersinn verschwenkt wird, um den nachlaufenden Klemmvorsprung 27 aus dem Bereich zwischen den Siegelbacken 102, 104 zu entfernen. In etwa zeitgleich greift eine insbesondere in Figur 4h deutlich zu erkennendes Klemmeinrichtung 46, welche zu jeder der Siegelbacken 102, 104 vorgesehen ist, von außen gegen die Schenkel 44 und klemmt die Folie 40 und den Beutel 42 in dem Maße, wie sich der Klemmschuh 15 und die Klemmfeder 16, die zuvor zur Lösung der Klemmung der Folie 40 und des Beutels 42 betätigt worden ist, aus den Siegelbacken 102, 104 entfernen. Damit erfolgt die Sicherung von Folie 40 und Beutel 42 durch die Klemmeinrichtung 46. Die Klemmeinrichtung 46 ist vorliegend in Form eines Klemmstempels ausgebildet, der relativ beweglich, beispielsweise verschwenkbar zu der zugeordneten Siegelbacke 102, 104 vorgesehen ist.

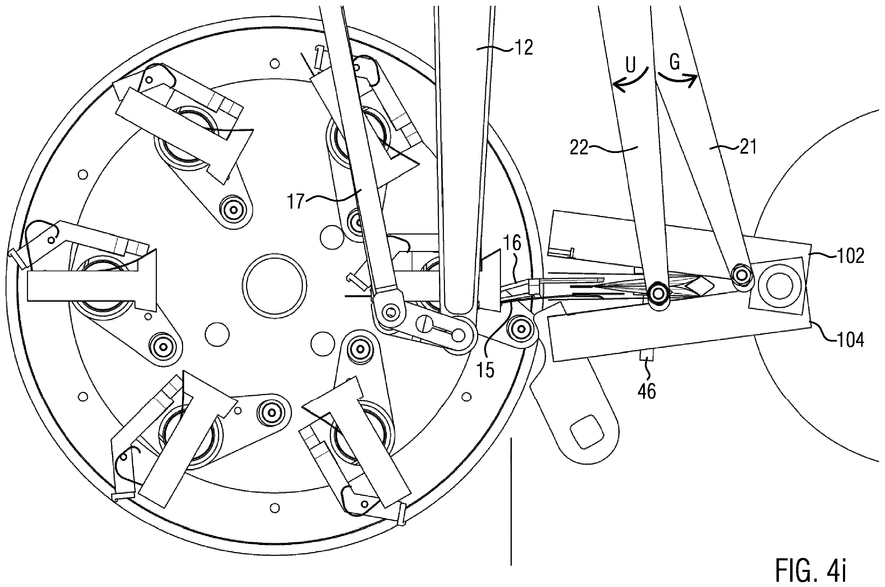

Nachdem Klemmschuh 15 und Klemmfeder 16 den Beutel 42 und die vorlaufenden und nachlaufenden Klemmvorsprünge 26, 27 die Folie 40 freigegeben haben, erfolgt die Halterung von Folie 40 und Beutel 42 zwischen den Siegelbacken 102, 104 allein durch die Klemmeinrichtung 46, was mit Figur 4i verdeutlicht ist. Mit zunehmender Verschwenkbewegung des nachlaufenden Folienhandhabungselementes 22 wird das vorlaufende Folienhandhabungselement 21 im Gegenuhrzeigersinn G verschwenkt und damit aus dem Bereich der Siegelbacken 102, 104 herausgeführt, die in ihrem hinteren Bereich schmaler ausgebildet sind, sodass die vorlaufenden Klemmvorsprünge 26 des vorlaufenden Folienhandhabungselementes 21 durch diese Verschwenkbewegung aus dem Bereich zwischen den Siegelbacken 102, 104 herausgeführt werden können.

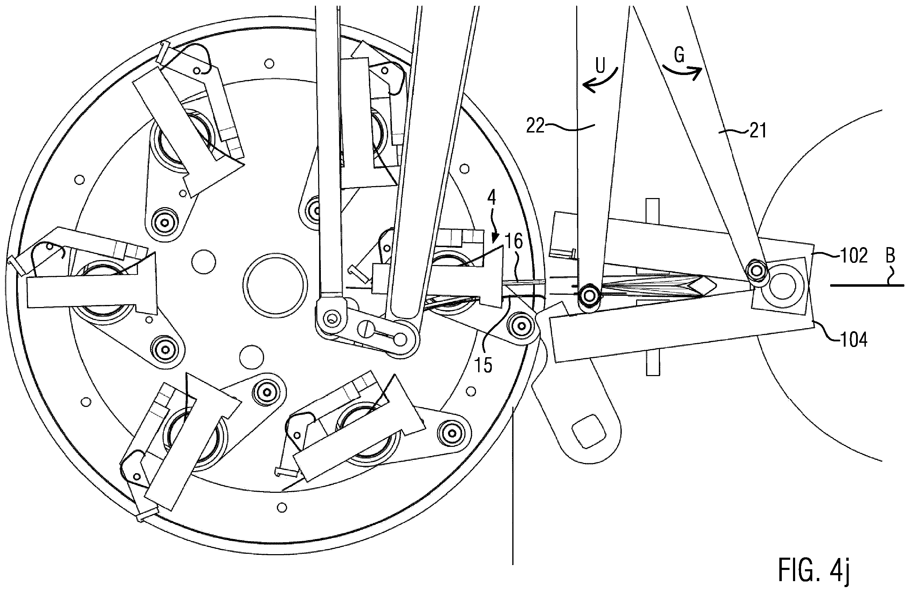

Durch relatives Verschwenken der vorderen und hinteren Beutelhandhabungsarme 12, 13 ergibt sich beim Zurückschwenken von Klemmschuh 15 und Klemmfeder 16 eine Lage unterhalb der Aufnahme 4 in Position VI. Mit anderen Worten werden der Klemmschuh 15 und die Klemmfeder 16 nicht auf der Bewegungsbahn B zurückgeführt (vgl. Figur 4j).

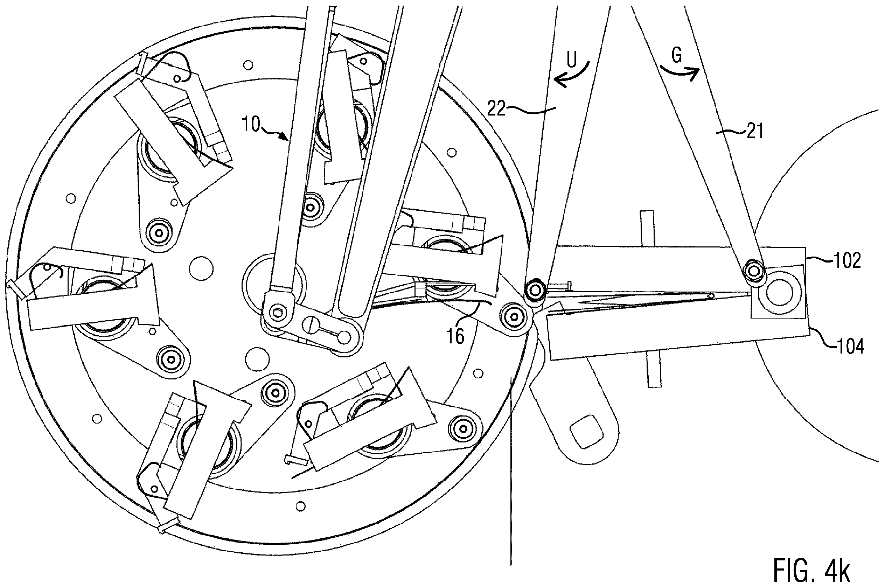

In Figur 4k wurden die beiden Siegelbacken 102, 104 bereits aufeinander zu geschwenkt. Dementsprechend ist der Abstand zwischen den beiden Siegelbacken 102, 104 kleiner als in der Darstellung nach Figur 4j.

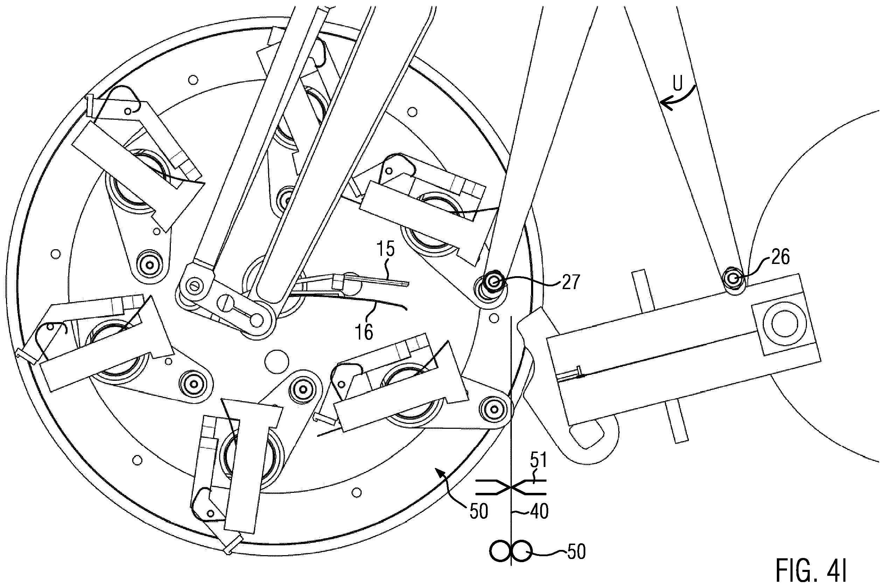

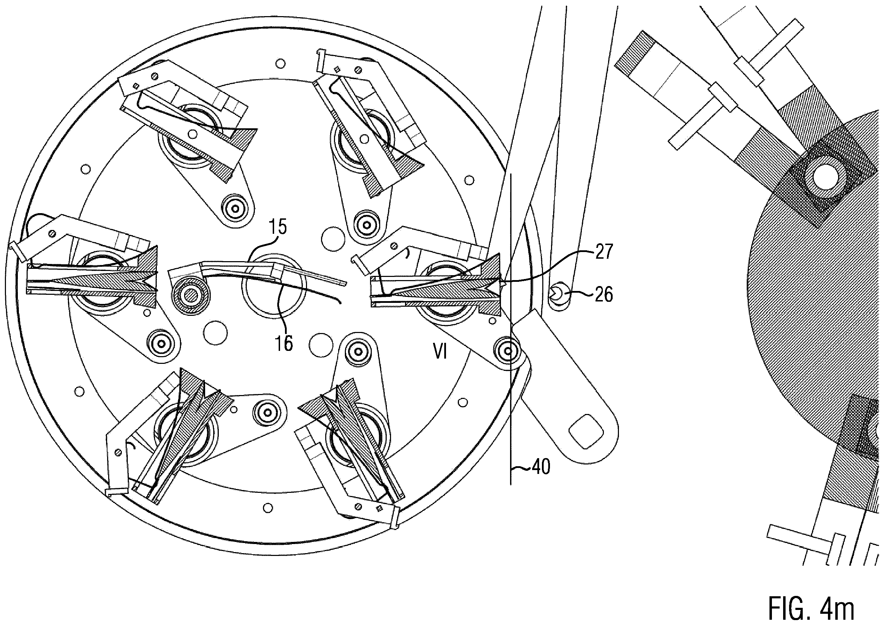

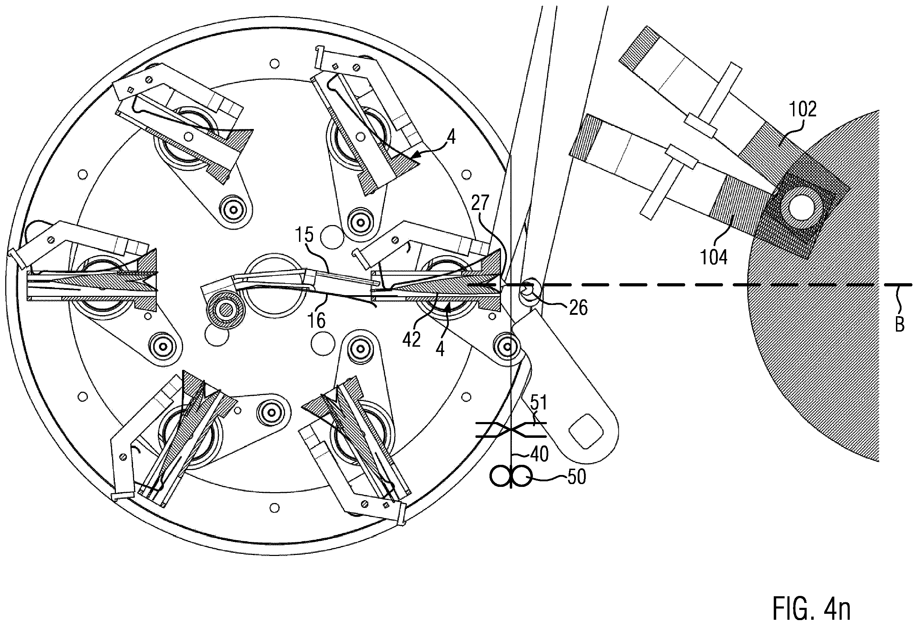

Zwischen den Figuren 4k und 4l wurden sowohl das Karussell der Beutelherstellungseinrichtung 2 wie auch die Siegelstation 100 im Gegenuhrzeigersinn verschwenkt. Die Siegelbacken 102, 104 werden im Rahmen dieser Drehbewegung vollständig aufeinander zubewegt. Nach Verbringen der Siegelbacken 102, 104 in die in Figur 4l gezeigte Siegelposition werden die Klemmeinrichtungen 46 gelöst. In der Siegelposition sind die den Beutel 42 seitlich und stirnseitig überragenden Ränder der Folie 40 zwischen den Siegelbacken 102, 104 geklemmt und werden vorliegend durch Wärmeeinwirkung miteinander verschweißt. Während die Siegelstation 100 gedreht wird, wird durch eine schematisch in den Figuren I und n durch zwei die Folie 40 klemmende und vorschiebende Antriebsrollen dargestellte Folienzufuhreinrichtung 50, denen eine schematisch dargestellte Schneideinrichtung 51 zugeordnet ist, eine neue Folie 40 zwischen den vorlaufenden Klemmvorsprung 26 und den nachlaufenden Klemmvorsprung 27 verbracht (vgl. Figuren 4l, 4m). Durch Drehen des Karussells der Beutelherstellungseinrichtung 2 wurde die in Uhrzeigersinn nächste Aufnahme 4 in die Position VI verbracht. Figur 4n zeigt bereits die Annäherung der offenen Klemmfeder 16 mit dem Klemmschuh 15 in Richtung auf den Beutel 42 und die Annäherung der vorlaufenden und nachlaufenden Klemmvorsprünge 26, 27 zur Klemmung eines mittleren Bereichs der Folie 40, der sich auf der Bewegungsbahn B befindet. Währenddessen dreht die Siegelstation 100 und bringt einen weiteren Satz von ersten und zweiten Siegelbacken 102, 104 zum Einschluss der Bewegungsbahn B und dementsprechend gegenüberliegend zu der Aufnahme 4. Der zuvor beschriebene Zyklus beginnt von neuem. Die Schneideinrichtung 51 trennt ein Längenstück der Folie 40 von einem Vorrat ab, wenn die Klemmvorsprünge 26, 27 die Folie 40 greifen.

Nachstehend wird das Ausführungsbeispiel der Siegelstation 100 gemäß der Ausgestaltung der vorliegenden Erfindung näher unter Bezugnahme auf die Figuren 5 ff. erläutert.

Figur 5 zeigt eine perspektivische Seitenansicht des Ausführungsbeispiels, das eine erste Welle 101, die einer ersten Siegelbacke 102 zugeordnet ist, und eine koaxial zu der ersten Welle 101 vorgesehene zweite Welle 103 umfasst, die der zweiten Siegelbacke 104 zugeordnet ist. Verschieblich auf der ersten Welle 101 ist eine Schiebehülse 106 vorgesehen, die über Formschlusselemente 108 mit zugeordneten Formschlussgegenelementen 110, die an einem stirnseitigen Ende der zweiten Welle 103 vorgesehen sind, im Eingriff ist.

Die Formschlusselemente 108 bilden sich in rein axialer Richtung in Bezug auf die Wellen 101, 103 erstreckende Führungsflächen 112 aus. Korrespondierend hierzu bildet die zweite Welle 103 mit ihren Formschlussgegenelementen 110 entsprechende Führungsflächen 114 aus.

Die Schiebehülse 106 hat einen ihre Umfangsfläche durchsetzenden Schrägschlitz 116, der sich relativ zu der axialen Erstreckung der ersten bzw. zweiten Welle 101, 103 schräg erstreckt, eine entsprechend schräg ausgebildete Führungsfläche 117 ausformt und von einem Führungszapfen 118 durchsetzt ist, der in dem Führungsschlitz 116 gehalten ist und mit seiner Außenumfangsfläche eine weitere Führungsfläche 119 ausformt, die mit der Führungsfläche 117 zusammenwirkt.

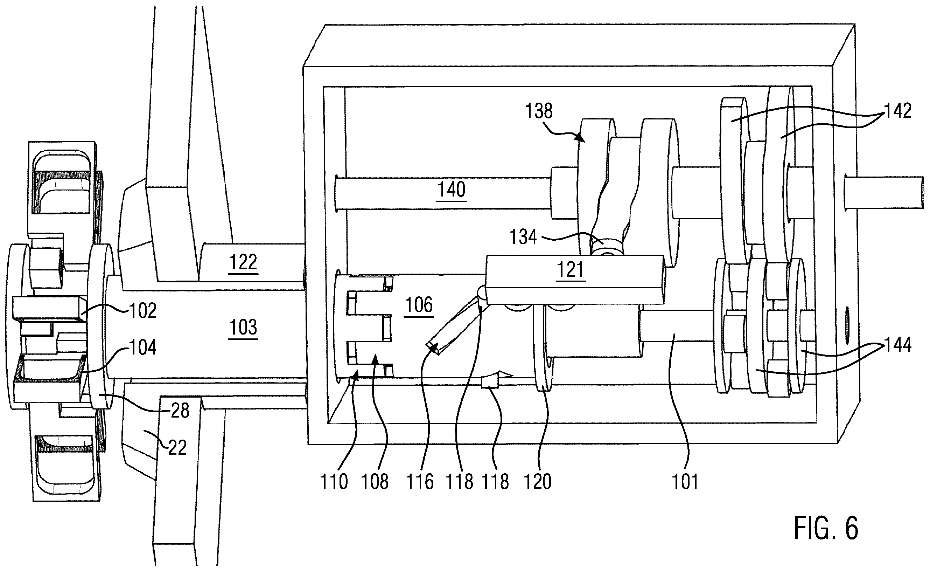

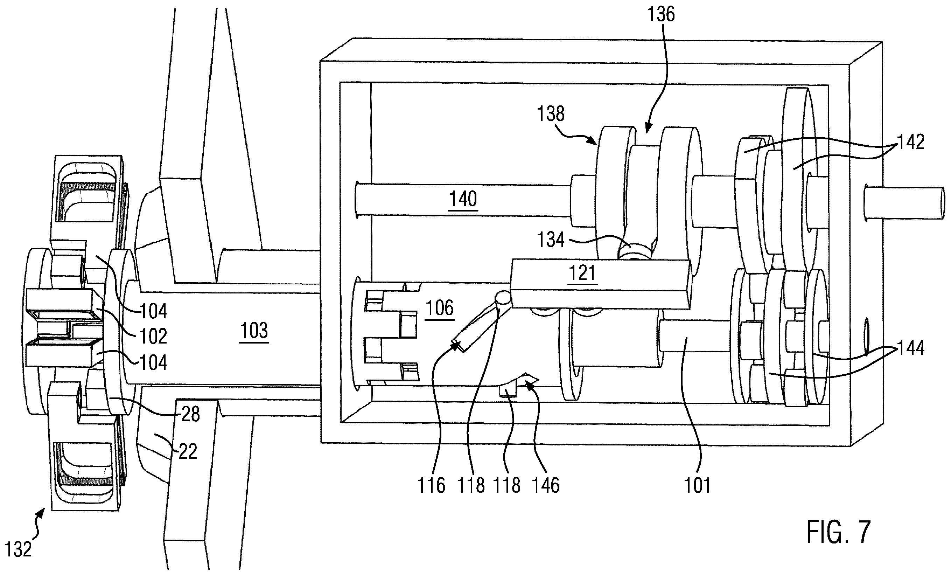

An seinem dem Formschlusselement 108 gegenüberliegenden Ende hat die Schiebehülse 106 einen Antriebskranz 120, der mit einem in den Figuren 6 und 7 gezeigten Schieber 121 zusammenwirkt, dessen Betrieb nachstehend noch näher erläutert wird.

Die erste und die zweite Welle 101, 103 durchsetzen jeweils eine Lagerhülse 122 zur Lagerung der Wellen 101, 103 an einem Getriebegehäuse 123. Die erste Welle 101 weist an ihrem freien Ende einen ersten Drehteller 124 auf, auf dessen Außenumfang mit gleichmäßigem Abstand zueinander mehrere der ersten Siegelbacken 102 montiert sind. Die ersten Siegelbacken 102 sind im wesentlichen verdrehfest an dem ersten Drehteller 124 montiert.

In entsprechender Weise weist die zweite Welle 103 einen zweiten Drehteller 128 auf, an dem mehrere der zweiten Siegelbacken 104 verdrehfest montiert sind. Dazu sind die zweiten Siegelbacken 104 gegenüber dem zweiten Drehteller 128 verschraubt. Durch Lösen der Verschraubung kann die Ausrichtung der jeweils zweiten Siegelbacke 104 relativ zu dem zweiten Drehteller 128 angepasst eingestellt werden. Dadurch lässt sich das Ausführungsbeispiel einstellen, sodass bei einer in Figur 5 gezeigten Siegelposition sämtliche erste Siegelbacken 102 an den zugeordneten zweiten Siegelbacken 104 anliegen, um die dazwischen vorgesehene und eine die Folienverpackung bildende Folie 40 zu klemmen und über eine U-förmig ausgebildete Naht zu siegeln.

Die Siegelbacken 102, 104 sind vorliegend Schweißbacken, die durch eine innerhalb der Siegelbacken 102, 104 vorgesehene Heizung erwärmt sind und bilden ein Siegelement 132 aus.

Wie den Figuren 6 und 7 zu entnehmen ist, wirkt der Schieber 121 über eine Führungsrolle 134 mit einer als Nut 136 ausgesparten Kulissenführung zusammen, die an einem Führungszylinder 138 vorgesehen ist. Der Führungszylinder 138 ist verdrehfest mit einer Antriebswelle 140 verbunden, die auch zwei Nockenscheiben 142 drehend antreibt, deren Nocken zum schrittweisen Antrieb der ersten und der zweiten Welle 101, 103 in Ausnehmungen von Abtriebsscheiben 144 eingreifen.

So wird die Antriebswelle 140 kontinuierlich bewegt, wohingegen die Wellen 101, 103 einerseits relativ zueinander und insgesamt schrittweise um eine gemeinsame Drehachse gedreht werden.

Zwischen den ersten und zweiten Siegelbacken 102, 104 kann ein Vorspannmittel wirken, um die entsprechenden Siegelbacken 102, 104 unter elastischer Vorspannung und Zwischenlage der Folie 40 gegeneinander anzulegen. Durch dieses elastische Mittel werden etwaige Toleranzfehler ausgeglichen. Das elastische Mittel kann beispielsweise zumindest eine der Siegelbacken 102, 104 elastisch abstützen. Alternativ kann auch beispielsweise die zweite Welle 103 aus einem torsionselastischen Material gebildet sein.

In den Figuren 5 bis 7 wurde auf die Darstellung der gesonderten Klemmeinrichtung 46 verzichtet.

Bei der gewählten Antriebsart wird die erste Welle 101 unmittelbar über die Abtriebsscheiben 144 angetrieben, während der Antrieb der Schiebehülse 106 durch Zusammenwirken des Führungszapfens 118 mit dem Schrägschlitz 116 und aufgrund der Stellung der Hülse 106 über den Schieber 121 erfolgt. Durch die Entkopplung der Antriebsbewegung der Antriebswelle 140 aufgrund einerseits der Nockenscheiben 142 und andererseits des Führungszylinders 138 kann sich eine Relativbewegung der Siegelbacken 102, 104 auch bei stehender erster Welle 101 ergeben. Die Sequenz zwischen dem Einbringen der Folie 40 zusammen mit dem Beutel 42, dem Schließen der beiden Siegelbacken 102, 104 und dem Einsiegeln des Beutels 42 zwischen die Folie 40 ergibt sich aus der Sequenz der Figuren 6, 7 und 5.

Zwischen den Figuren 6 und 7 wird bei stehender erster Welle 101 und Relativbewegung der Schiebehülse 106 die Siegelposition vorbereitet. Die Siegelbacken 102, 104 werden gegeneinander angelegt. Dabei verbleibt die erste Siegelbacke 102 ortsfest, wohingegen die zweite Siegelbacke 104 durch Betätigen der Schiebehülse 106 verschwenkt wird. Nach Anlage der beiden Siegelbacken 102, 104 gegeneinander verschwenken die erste und die zweite Welle 101, 103 zeitgleich. Dabei bleibt die Lage der Schiebehülse 106 relativ zu der zweiten Welle 103 unverändert. Der verdrehfest mit der ersten Welle 101 verbundene Führungszapfen 118 nimmt die Schiebehülse 106 mit, sodass auch die zweiten Siegelbacken 104 verschwenkt werden.

Der Schrägschlitz 116 und der Führungszapfen 118 bilden dabei eine Schrägführung 146 aus, die eine Zwangsführung verwirklicht, welche die beiden Wellen 101, 103 mit fest vorgegebener Kinematik miteinander koppelt.

Alternativ zu dem gezeigten Ausführungsbeispiel kann auch der zweiten Welle 103 ein Antrieb mit Nockenscheiben und Abtriebsscheiben zugeordnet sein, wie er bei dem gezeigten Ausführungsbeispiel für die erste Welle 101 verwirklicht ist. Auch hierdurch lässt sich ein eigenständiger und durch die Drehung der Antriebswelle 140 vorgegebener Antrieb für die zweiten Siegelbacken 104 verwirklichen. Aber auch bei dieser Zwangsführung sind die ersten und die zweiten Siegelbacken 102, 104 allein über die Antriebswelle 140 angetrieben und zwangsgekoppelt.

### Bezugszeichenliste

- 2: Beutelherstellungseinrichtung
- 4: Aufnahme
- 10: Beutelhandhabungseinrichtung
- 12: vorderer Beutelhandhabungsarm
- 13: hinterer Beutelhandhabungsarm
- 14: Koppelstange
- 15: Klemmschuh
- 16: Klemmfeder
- 17: Betätigungsarm
- 20: Folienhandhabungseinrichtung
- 21: vorlaufendes Folienhandhabungselement
- 22: nachlaufendes Folienhandhabungselement
- 24: vorlaufendes Handhabungsarm
- 25: nachlaufendes Handhabungsarm
- 26: vorlaufender Klemmvorsprung
- 27: nachlaufender Klemmvorsprung
- 30: Antriebseinrichtung
- 32: Kurvenscheibe
- 33: Antriebswelle
- 34: Abnehmer
- 36: Lagerachse
- 37: Hebel
- 40: Folie
- 42: Beutel
- 44: Schenkel
- 45: Falz
- 46: Klemmeinrichtung
- 50: Folienzufuhreinrichtung
- 51: Schneideinrichtung
- B: Bewegungsbahn
- U: Verschwenken im Uhrzeigersinn
- G: Verschwenken im Gegenuhrzeigersinn
- I-VI: Position der Aufnahme 4
- 100: Siegelstation
- 101: erste Welle
- 102: erste Siegelbacke
- 103: zweite Welle
- 104: zweite Siegelbacke
- 106: Schiebehülse
- 108: Formschlusselemente
- 110: Formschlussgegenelemente
- 112: Führungsfläche
- 114: Führungsfläche
- 116: Schrägschlitz
- 117: Führungsfläche des Schrägschlitzes
- 118: Führungszapfen
- 119: Führungsfläche des Führungszapfens
- 120: Antriebskranz
- 121: Schieber
- 122: Lagerhülse
- 123: Getriebegehäuse
- 124: erster Drehteller
- 128: zweiter Drehteller
- 132: Siegelelement
- 134: Führungsrolle
- 136: Nut
- 138: Führungszylinder
- 140: Antriebswelle
- 142: Nockenscheibe
- 144: Abtriebsscheibe
- 146: Schrägführung

## Patentansprüche

1. Vorrichtung zum Herstellen eines in einer Umhüllung aufgenommenen Beutels mit einer Beutelherstellungseinrichtung (2), die dazu eingerichtet ist, einen Beutel (42) enthaltend brühfähiges Material in einer wasserdurchlässigen Umhüllung herzustellen, und mit einer Siegelstation (100) mit zwei relativ zueinander beweglichen Siegelbacken (102, 104) zum Einsiegeln des Beutels (42) in einer durch ein Umhüllungsmaterial (40) gebildeten Umhüllung,
**gekennzeichnet durch** eine Beutelhandhabungseinrichtung (10) zur Entnahme des fertigen Beutels (42) aus der Beutelherstellungseinrichtung (2) und einer Umhüllungsmaterialhandhabungseinrichtung (20) zum Handhaben des Umhüllungsmaterials (40) beim U-förmigen Einschlagen des Umhüllungsmaterials (40), wobei die Beutelhandhabungseinrichtung (10) und die Umhüllungsmaterialhandhabungseinrichtung (20) so ausgebildet sind, dass der Beutel (42) gehalten von der Beutelhandhabungseinrichtung (10) und das Umhüllungsmaterial (40) gehalten von der Umhüllungsmaterialhandhabungseinrichtung (20) zwischen die Siegelbacken (102, 104) der Siegelstation (100) verbracht werden.

2. Vorrichtung nach Anspruch 1, **gekennzeichnet durch** eine Umhüllungsmaterialzufuhreinrichtung (50), die ein Längenstück des Umhüllungsmaterials (40) zwischen dem in der Beutelherstellungseinrichtung (2) befindlichen fertiggestellten Beutel (42) und der Siegelstation (100) hält.

3. Vorrichtung nach Anspruch 1 oder 2, **gekennzeichnet durch** eine der Siegelstation (100) zugeordnete Klemmeinrichtung (46), die den Beutel (42) zusammen mit der U-förmig geformten, den Beutel (42) einschließenden Folie (40) vor dem Schließen der Siegelbacken (102, 104) zwischen den Siegelbacken (102, 104) hält.

4. Verfahren zum Herstellen eines in einer Umhüllung aufgenommenen Beutels (42), bei dem ein ein brühfähiges Material enthaltender Beutel (42) hergestellt, zwischen gegenüberliegende Schenkel (44) eines Umhüllungsmaterials (40) angeordnet und die Schenkel (44) in einer Siegelstation (100) zur Bildung der den Beutel (42) umgebenden Umhüllung miteinander verbunden werden, **dadurch gekennzeichnet, dass** das Umhüllungsmaterial (40) beim Einbringen in die Siegelstation (100) U-förmig umgeformt wird.

5. Verfahren nach Anspruch 4, **dadurch gekennzeichnet, dass** das Umhüllungsmaterial (40) mit seinem mittleren Bereich auf einer Bewegungsbahn (B) angeordnet wird, auf welcher der fertiggestellte Beutel (42) aus der Beutelherstellungseinrichtung (2) in die Siegelstation (100) verbracht wird.

6. Verfahren nach einem der Ansprüche 4 oder 5, **dadurch gekennzeichnet, dass** der Beutel (42) und das Umhüllungsmaterial (40) beim Einbringen in die Siegelstation (100) auf der Bewegungsbahn (B) relativ zueinander bewegt werden.

7. Verfahren nach einem der Ansprüche 4 bis 6, **dadurch gekennzeichnet, dass** das Umhüllungsmaterial (40) beim Einbringen des Beutels (42) in die Siegelstation (100) dem Beutel (42) vorlaufend bewegt wird.

8. Verfahren nach einem der Ansprüche 4 bis 7, **dadurch gekennzeichnet, dass** der Beutel (42) und das Umhüllungsmaterial (40) beim Einbringen des Beutels (42) in die Siegelstation (100) unabhängig voneinander gehandhabt werden.

9. Vorrichtung nach einem der Ansprüche 1 bis 3,
**dadurch gekennzeichnet,**
**dass** die Siegelstation (100) eine erste Welle (101), die zumindest eine erste Siegelbacke (102) trägt, und eine zweite Welle (103) umfasst, die zumindest eine zweite, mit der erste Siegelbacke (102) beim Einsiegeln der Folienumhüllung zusammenwirkende Siegelbacke (104) trägt, und dass die erste und die zweite Welle (101; 103) relativ zueinander beweglich sind, um die Siegelbacken (102; 104) zur Aufnahme des Beutels (42) und der Folie (40) voneinander zu beanstanden und zum Siegeln der Folie (40) gegeneinander anzulegen.

10. Vorrichtung nach Anspruch 9, **dadurch gekennzeichnet, dass** die Siegelbacken (102; 104) im Wesentlichen starr an der zugeordneten Welle (101; 103) befestigt sind.

11. Vorrichtung nach Anspruch 9 oder 10, **gekennzeichnet durch** ein Vorspannelement, das beim Anliegen der Siegelbacken (102; 104) auf zumindest eine der Siegelbacken (102; 104) einwirkt und die Siegelbacken (102; 104) unter Vorspannung gegeneinander angelegt hält.

12. Vorrichtung nach einem der Ansprüche 9 bis 11, **dadurch gekennzeichnet, dass** die beiden Wellen (101; 103) über eine gemeinsame Antriebswelle (140) angetrieben sind.

13. Vorrichtung nach einem der Ansprüche 9 bis 12, **dadurch gekennzeichnet, dass** die beiden Wellen (101; 103) über eine Zwangsführung (146) gekoppelt sind.

## Claims

1. Device for making a pouch received in a wrapping, comprising a pouch making device (2) which is adapted to produce a pouch (42) containing brewable material in a water-permeable wrapping, and comprising a sealing station (100) with two sealing jaws (102, 104) movable relative to each other for sealing the pouch (42) in a wrapping formed by a wrapping material (40),
**characterized by** a pouch handling device (10) for removing the finished pouch (42) from the pouch making device (2) and a wrapping material handling device (20) for handling the wrapping material (40) during the U-shaped wrapping of the wrapping material (40), wherein the pouch handling device (10) and the wrapping material handling device (20) are adapted such that the pouch (42) held by pouch handling device (10) and the wrapping material (40) held by the wrapping material handling device (20) are moved between the sealing jaws (102, 104) of the sealing station (100).

2. Device according to claim 1, **characterized by** a wrapping material feeding device (50) which holds a length piece of wrapping material (40) between the finished pouch (42) located in the pouch making device (2) and the sealing station (100).

3. Device according to claim 1 or 2, **characterized by** a clamping device (46) associated with the sealing station (100) which holds the pouch (42) together with the U-shaped film (40) enclosing the pouch (42) between the sealing jaws (102, 104) prior to closing the sealing jaws (102, 104).

4. Method for making a pouch (42) accommodated in a wrapping in which a pouch (42) containing a brewable material is produced, arranged between opposite legs (44) of a wrapping material (40) and the legs (44) are joined together in a sealing station (100) to form the wrapping surrounding the pouch (42), **characterized in that** the wrapping material (40) is reshaped into a U-shape when introduced into the sealing station (100).

5. Method according to claim 4, **characterized in that** the wrapping material (40) is arranged with its central area on a movement path (B) on which the finished pouch (42) is moved from the pouch making device (2) to the sealing station (100).

6. Method according to claims 4 or 5, **characterized in that** the pouch (42) and the wrapping material (40) are moved relative to each other along the movement path (B) when introduced into the sealing station (100).

7. Method according to one of claims 4 to 6, **characterized in that** the wrapping material (40) is moved leading the pouch (42) when the pouch (42) is introduced into the sealing station (100).

8. Method according to one of claims 4 to 7, **characterized in that** the pouch (42) and the wrapping material (40) are handled independently of each other when the pouch (42) is introduced into the sealing station (100).

9. Device according to one of claims 1 to 3,
**characterized in that**
the sealing station (100) comprises a first shaft (101) which carries at least one first sealing jaw (102) and a second shaft (103) which carries at least one second sealing jaw (104) cooperating with the first sealing jaw (102) during sealing of the film wrapping, and **in that** the first and second shafts (101; 103) are movable relative to one another in order to space apart the sealing jaws (102; 104) for accommodating the pouch (42) and the film (40) and to apply them to one another for sealing the film (40).

10. Device according to claim 9, **characterized in that** the sealing jaws (102; 104) are substantially rigidly attached to the associated shaft (101; 103).

11. Device according to claim 9 or 10, **characterized by** a pretensioning element which acts on at least one of the sealing jaws (102; 104) when the sealing jaws (102; 104) are applied and holds the sealing jaws (102; 104) against each other under pretension.

12. Device according to one of claims 9 to 11, **characterized in that** the two shafts (101; 103) are driven via a common drive shaft (140).

13. Device according to one of claims 9 to 12, **characterized in that** the two shafts (101; 103) are coupled via a positive guide (146).

## Revendications

1. Dispositif de fabrication d'un sachet reçu dans une enveloppe, comprenant un dispositif de fabrication de sachet (2) qui est configuré pour fabriquer un sachet (42) contenant un matériau infusable dans une enveloppe perméable à l'eau, et un poste de scellement (100) avec deux mâchoires de scellement (102, 104) mobiles l'une par rapport à l'autre pour sceller le sachet (42) dans une enveloppe formée par un matériau d'enveloppe (40),
**caractérisé par** un dispositif de manipulation de sachet (10) pour retirer le sachet fini (42) du dispositif de fabrication de sachet (2) et un dispositif de manipulation de matériau d'enveloppe (20) pour manipuler le dispositif de matériau d'enveloppe (40) lorsque le matériau d'enveloppe (40) est replié en forme de U, dans lequel le dispositif de manipulation de sachet (10) et le dispositif de manipulation de matériau d'enveloppe (20) sont conçus de sorte que le sachet (42) maintenu par le dispositif de manipulation de sachet (10), et le matériau d'enveloppe (40) maintenu par le dispositif de manipulation de matériau d'enveloppe (20) sont passés entre les mâchoires de scellement (102, 104) du poste de scellement (100).

2. Dispositif selon la revendication 1, **caractérisé par** un dispositif de fourniture de matériau d'enveloppe (50) qui maintient une longueur du matériau d'enveloppe (40) entre le sachet terminé (42) situé dans le dispositif de fabrication de sachet (2) et le poste de scellement (100).

3. Dispositif selon la revendication 1 ou 2, **caractérisé par** un dispositif de serrage (46) associé au poste de scellement (100), qui maintient le sachet (42) entre les mâchoires de scellement (102, 104), conjointement avec la feuille (40) formée en forme de U entourant le sachet (42), avant la fermeture des mâchoires de scellement (102, 104).

4. Procédé de fabrication d'un sachet (42) reçu dans une enveloppe, dans lequel un sachet (42) contenant un matériau infusable est fabriqué, est agencé entre des branches opposées (44) d'un matériau d'enveloppe (40) et les branches (44) sont reliées l'une à l'autre dans un poste de scellement (100) pour former l'enveloppe entourant le sachet (42), **caractérisé en ce que** le matériau d'enveloppe (40) est déformé en forme de U lors de l'insertion dans le poste de scellement (100).

5. Procédé selon la revendication 4, **caractérisé en ce que** le matériau d'enveloppe (40) est agencé avec sa zone centrale sur une trajectoire de déplacement (B) sur laquelle le sachet terminé (42) est passé du dispositif de fabrication de sachet (2) au poste de scellement (100).

6. Procédé selon l'une des revendications 4 ou 5, **caractérisé en ce que** le sachet (42) et le matériau d'enveloppe (40) sont déplacés l'un par rapport à l'autre sur la trajectoire de déplacement (B) lors de l'insertion dans le poste de scellement (100).

7. Procédé selon l'une des revendications 4 à 6, **caractérisé en ce que** le matériau d'enveloppe (40) est déplacé avant le sachet (42) lors de l'insertion du sachet (42) dans le poste de scellement (100).

8. Procédé selon l'une quelconque des revendications 4 à 7, **caractérisé en ce que** le sachet (42) et le matériau d'enveloppe (40) sont manipulés indépendamment l'un de l'autre lors de l'insertion du sachet (42) dans le poste de scellement (100).

9. Dispositif selon l'une quelconque des revendications 1 à 3,
**caractérisé en ce que**,
le poste de scellement (100) comprend un premier arbre (101) qui porte au moins une première mâchoire de scellement (102) et un second arbre (103) qui porte au moins une seconde mâchoire de scellement (104) coopérant avec la première mâchoire de scellement (102) lors du scellement de l'enveloppe en feuille, et **en ce que** les premier et second arbres (101 ; 103) sont mobiles l'un par rapport à l'autre pour espacer les mâchoires de scellement (102 ; 104) l'une de l'autre afin de recevoir le sachet (42) et la feuille (40) et pour les appuyer l'une contre l'autre pour sceller la feuille (40).

10. Dispositif selon la revendication 9, **caractérisé en ce que** les mâchoires de scellement (102 ; 104) sont fixées de manière sensiblement rigide à l'arbre associé (101 ; 103).

11. Dispositif selon la revendication 9 ou 10, **caractérisé par** un élément de précontrainte qui agit sur au moins une des mâchoires de scellement (102 ; 104) lorsque les mâchoires de scellement (102 ; 104) sont appuyées, et maintient les mâchoires de scellement (102 ; 104) appuyées l'une contre l'autre sous précontrainte.

12. Dispositif selon l'une des revendications 9 à 11, **caractérisé en ce que** les deux arbres (101 ; 103) sont entraînés par l'intermédiaire d'un arbre d'entraînement commun (140).

13. Dispositif selon l'une des revendications 9 à 12, **caractérisé en ce que** les deux arbres (101 ; 103) sont couplés par l'intermédiaire d'un guidage forcé (146).
